# EUROPÄISCHE PATENTSCHRIFT

(11) **EP 1 107 518 B1**
(45) Veröffentlichungstag und Bekanntmachung des Hinweises auf die Patenterteilung: **16.05.2007**
(21) Anmeldenummer: 00440307.7
(22) Anmeldetag: 24.11.2000
(51) Int. Cl.: H04L 12/56, H04L 12/64, H04Q 11/04

(54) **Netzwerkknoten zum Vermitteln von digitaler information unterschiedlicher Protokolltypen**
Network node adapted for switching digital data with different types of protocols
Noeud de réseau adapté à la commutation de protocols différents

(30) Priorität: 11.12.1999 DE 19959918
(43) Veröffentlichungstag der Anmeldung: 13.06.2001
(73) Patentinhaber: Alcatel Lucent, 75008 Paris (FR)
(72) Erfinder: Turban, Karl-Albert, Dipl.Ing, 71229 Leonberg-Höfingen (DE)
(74) Vertreter: Schmidt, Werner Karl

(56) Entgegenhaltungen:
- WO-A-94/03004
- US-A- 5 687 172
- US-A- 5 905 873
- SATO K ET AL: "SONET/SDH OPTICAL TRANSMISSION SYSTEM" FUJITSU-SCIENTIFIC AND TECHNICAL JOURNAL, FUJITSU LIMITED. KAWASAKI, JP, Bd. 35, Nr. 1, Juli 1999 (1999-07), Seiten 13-24, XP000926854 ISSN: 0016-2523

## Beschreibung

### Stand der Technik

Die Erfindung geht aus von einem Netzwerkknoten zum Vermitteln von digitaler Information unterschiedlicher Protokolltypen, mit mehreren Modulen, die in einer Eingangsstufe, einer Zentralstufe und einer Ausgangsstufe angeordnet sind, wobei jedes Modul der Eingangsstufe mit jedem Modul der Zentralstufe und jedes Modul der Zentralstufe mit jedem Modul der Ausgangsstufe verbunden ist. Die Erfindung betrifft ebenfalls ein Verfahren zum Vermitteln von digitaler Information unterschiedlicher Protokolltypen, bei dem ein entsprechender Netzwerkknoten vorgesehen ist.

Ein derartiger Netzwerkknoten ist aus der WO 94/03004 A1 bekannt. Dort wird die digitale Information außerhalb der Zentralstufe in Abhängigkeit vom Protokolltyp umgeleitet, sofern der Protokolltyp von der Zentralstufe nicht verarbeitet werden kann.

Weiterhin ist bekannt, zur synchronen Übertragung von digitalen Informationspaketen eine sogenannte SDH-Schaltmatrix zu verwenden (SDH = synchrone digitale Hierarchie). Eine derartige SDH-Schaltmatrix weist drei Stufen auf, und zwar eine Eingangsstufe, eine Zentralstufe und eine Ausgangsstufe. Jede Stufe enthält mehrere Module, wobei jedes Modul mit mehreren sogenannten Ports für ankommende oder abgehende Informationspakete versehen ist. Jedes Modul jeder Stufe ist mit jedem Modul der benachbarten Stufe verbunden. Auf diese Weise kann ankommende Information von jedem der Module der Eingangsstufe zu jedem der Module der Ausgangsstufe weitergeleitet werden.

Es ist ebenfalls bekannt, dass Information in der Form von ATM- oder IP-Paketen (ATM = asynchroner Transfermode, IP = Internet-Protokoll) in einer SDH-Schaltmatrix als aggregierter Paketstrom vermittelt wird. Das individuelle Vermitteln einzelner Informationspakete wird nicht in den SDH-Netzwerkknoten, sondern in nachgeschalteten Geräten durchgeführt, z.B. in sogenannten ATM-Switches oder IP-Routers. Der Hardware-Aufwand und die daraus resultierenden Kosten sind ersichtlich hoch.

Als weiterer Stand der Technik wird auf die US 5,905,873 hingewiesen.

### Aufgabe und Vorteile der Erfindung

Aufgabe der Erfindung ist es, einen Netzwerkknoten zum Vermitteln von digitaler Information unterschiedlicher Protokolltypen zu schaffen, der einen geringen Hardware-Aufwand und damit geringere Kosten erfordert.

Diese Aufgabe wird bei einem Netzwerkknoten der eingangs genannten Art erfindungsgemäß dadurch gelöst, dass jeweils zwischen der Eingangsstufe und der Zentralstufe sowie zwischen der Zentralstufe und der Ausgangsstufe eine für alle Protokolltypen einheitliche Schnittstelle vorgesehen ist, dass jedes der Module der Zentralstufe für einen einzigen Protokolltyp ausgelegt ist, dass in der Zentralstufe Module für unterschiedliche Protokolltypen vorhanden sind, und dass die Schnittstellen Mittel aufweisen, um Information in Abhängigkeit vom Protokolltyp an ein daran angepasstes Modul der Zentralstufe weiterzuleiten. Bei einem Verfahren der eingangs genannten Art wird die Aufgabe erfindungsgemäß entsprechend gelöst.

Die Erfindung schafft eine Struktur eines Netzwerkknotens, die es ermöglicht, dass Information, die in unterschiedlichen Protokolltypen repräsentiert ist, direkt und ohne externe oder zusätzliche Geräte vermittelt werden kann. Die Struktur ist dreistufig und besteht aus Modulen für die Eingangsstufe, die Zentralstufe und die Ausgangsstufe. Jedes Modul der Eingangsstufe ist mit jedem Modul der Zentralstufe verbunden, ebenso ist jedes Modul der Zentralstufe mit jedem Modul der Ausgangsstufe verbunden.

Durch die erfindungsgemäß zwischen den Stufen angeordneten einheitlichen Schnittstellen wird die Möglichkeit eröffnet, in der Zentralstufe Module für unterschiedliche Protokolltypen unterzubringen. Es ist also nicht mehr erforderlich, zusätzliche ATM-Switches oder IP-Router an eine SDH-Schaltmatrix anzuschließen, um ATM- oder IP-Verkehr zu vermitteln, sondern es können eine ATM- oder eine IP-Matrix unmittelbar in der Zentralstufe untergebracht werden.

Aufgrund der einheitlichen Schnittstellen besitzen die Module der Zentralstufe eine einheitliche Anbindung nach außen, so dass sie nicht mehr an einen bestimmten Protokolltyp gebunden sind. Es ist damit möglich, in der Zentralstufe Module unterschiedlicher Protokolltypen vorzusehen, so dass nicht nur SDH-Verkehr, sondern über die zugehörigen Module der Zentralstufe auch ATM-Verkehr oder IP-Verkehr geschaltet werden kann.

Bei der Erfindung ist es nicht mehr erforderlich, den ATM-Verkehr mehrstufig zuerst über eine SDH-Schaltmatrix und dann über einen ATM-Switch zu vermitteln. Statt dessen kann erfindungsgemäß der ATM-Verkehr direkt über eine entsprechende ATM-Matrix in der Zentralstufe geschaltet werden.

Der Hardware-Aufwand ist damit ersichtlich wesentlich geringer als bisher.

Im Betrieb wird von den Modulen der Eingangsstufe erkannt, welchem Protokolltyp die jeweils zu übertragende Information angehört. In Abhängigkeit von dem Protokolltyp wird dann die Information an ein Modul der Zentralstufe weitergeleitet, das ebenfalls diesem Protokolltyp angehört. Damit können neben SDH-Informationsströmen auch ATM- und IP-Pakete sofort von dem zugehörigen Modul weiterverarbeitet werden, ohne dass die ATM- oder IP-Pakete die SDH-Schaltmatrix verlassen müssen, wie das bisher der Fall war. Dieser Vorteil ist auch dann vorhanden, wenn in einer STM-Struktur (STM = synchronous transport module) Container mit Informationen unterschiedlicher Protokolltypen gemischt auftreten.

Ein weiterer Vorteil der Erfindung besteht darin, dass der SDH-Verkehr nicht mehr durch ATM- oder IP-Verkehr blockiert wird, wie das bisher der Fall war. Statt dessen steht für jeden Protokolltyp ein separates, jeweils zugehöriges Modul in der Form einer SDH-Matix und/oder einer ATM-Matrix und/oder einer IP-Matrix zur Verfügung. Dies stellt einen wesentlichen Vorteil der Erfindung hinsichtlich der Übertragungsrate bzw. -geschwindigkeit des erfindungsgemäßen Netzwerkknotens dar.

Ein weiterer Vorteil der Erfindung besteht in der Möglichkeit, den erfindungsgemäßen Netzwerkknoten jederzeit und völlig flexibel aufrüsten oder ausbauen zu können. Hierzu ist es nur erforderlich, die erwünschten zusätzlichen Module zu ergänzen. Aufgrund der erfindungsgemäßen einheitlichen Schnittstellen können dabei in der Zentralstufe beliebige Module für SDH-Verkehr oder für ATM-Verkehr oder für IP-Verkehr ergänzt werden. Auch dieser Vorteil macht sich in einem geringeren Hardware-Aufwand und daraus resultierenden geringeren Kosten bemerkbar.

Besonders vorteilhaft ist es, wenn die Module der Zentralstufe austauschbar sind. Damit ist es möglich, dass ein Modul eines bestimmten Protokolltyps nachträglich gegen ein anderes Modul eines anderen Protokolltyps ausgetauscht wird. Dies kann aufgrund der erfindungsgemäßen einheitlichen Schnittstellen jederzeit und wiederum völlig flexibel auch im Betrieb erfolgen. Der erfindungsgemäße Netzwerkknoten kann somit nicht nur flexibel erweitert werden, sondern es ist auch eine Änderung des Netzwerkknotens jederzeit ohne weiteres möglich.

Durch die vorgenannten Möglichkeiten der flexiblen Erweiterbarkeit und Änderbarkeit des erfindungsgemäßen Netzwerkknotens ergibt sich der weitere Vorteil der Erfindung, dass der Netzwerkknoten skalierbar ist. Einzig durch entsprechende zusätzliche oder ausgetauschte Module kann der erfindungsgemäße Netzwerkknoten je nach Bedarf erweitert oder geändert werden.

Ein weiterer Vorteil der Erfindung besteht in der Vereinheitlichung von Bauteilen. Insbesondere die Verwendung der erfindungsgemäßen einheitlichen Schnittstellen ermöglicht deren Herstellung in großen Stückzahlen. Dies stellt eine weitere Reduktion der Entwicklungs- und Produktionskosten des erfindungsgemäßen Netzwerkknotens dar.

Ebenfalls eröffnet die Erfindung die Möglichkeit den Netzwerkknoten dezentral aufzubauen. Daraus ergibt sich eine erhöhte Zuverlässigkeit bei vermindertem Aufwand.

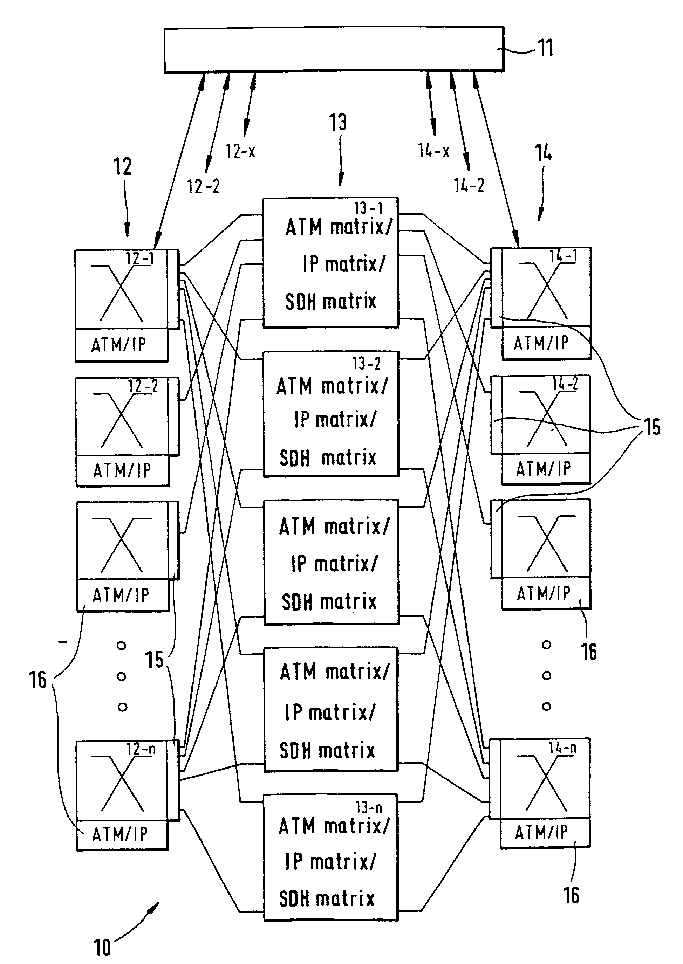

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind.

### Ausführungsbeispiel der Erfindung

Die einzige Figur der Zeichnung zeigt ein schematisches Blockschaltbild eines Ausführungsbeispiels eines erfindungsgemäßen Netzwerkknotens.

In der Figur ist ein Netzwerkknoten 10 dargestellt, der drei Stufen aufweist, und zwar eine Eingangsstufe 12, eine Zentralstufe 13 und eine Ausgangsstufe 14. Die Eingangsstufe 12 ist mit einer Mehrzahl von Modulen 12-1, 12-2, ..., 12-n versehen, die Zentralstufe 13 mit einer Mehrzahl von Modulen 13-1, 13-2, ..., 13-n und die Ausgangsstufe 14 mit einer Mehrzahl von Modulen 14-1, 14-2, ..., 14-n. Die Module der einzelnen Stufen werden nachfolgend vereinfacht mit den Bezugszeichen 12-x, 13-x und 14-x gekennzeichnet.

Jedes der Module 12-x der Eingangsstufe 12 ist mit jedem Modul 13-x der Zentralstufe 13 verbunden. Ebenfalls ist jedes der Module 13-x der Zentralstufe 13 mit jedem der Module 14-x der Ausgangsstufe 14 verbunden.

Jedes der Module 12-x der Eingangsstufe 12 ist eingangsseitig mit einer Mehrzahl von Ports versehen, auf denen digitale Information empfangen wird. Jedes der Module 14-x der Ausgangsstufe 14 ist ausgangsseitig mit einer Mehrzahl von Ports versehen, auf denen digitale Information abgegeben wird.

Jedes der Module 13-x der Zentralstufe 13 ist für einen einzigen bestimmten Protokolltyp ausgelegt. So kann jedes der Module 13-x der Zentralstufe 13 an das SDH-Protokoll oder das ATM-Protokoll oder das IP-Protokoll angepasst sein. Die Module 13-x der Zentralstufe 13 können damit eine SDH-Matrix oder eine ATM-Matrix oder eine IP-Matrix enthalten. Die Module 13-x der Zentralstufe 13 können somit - je nach vorhandenem Protokolltyp - SDH-Verkehr oder ATM-Verkehr oder IP-Verkehr vermitteln.

Zwischen den Modulen 13-x der Zentralstufe 13 und den Modulen 12-x und 14-x der Eingangsstufe 12 und der Ausgangsstufe 14 sind einheitliche Schnittstellen 15 in der Form von Baugruppen vorgesehen. Diese Schnittstellen 15 sind in der Figur jeweils bei den Modulen 12-x und 14-x der Eingangsstufe 12 und der Ausgangsstufe 14 dargestellt. Es ist aber ebenfalls erforderlich, dass die Schnittstellen 15 auch jeweils in den Modulen 13-x der Zentralstufe 13 vorhanden sind. Diese letztgenannten Schnittstellen 15 sind in der Figur aus Gründen der Übersichtlichkeit nicht dargestellt.

Ebenfalls können die Schnittstellen 15 unabhängig von den Modulen als separate Schnittstellenadapter zwischen der Eingangsstufe 12 und der Zentralstufe 13 sowie zwischen der Zentralstufe 13 und der Ausgangsstufe 14 vorhanden sein.

Durch die einheitlichen Schnittstellen 15 besitzt jedes der Module 13-x der Zentralstufe 13 nach außen, also in Richtung zu den Modulen 12-x und 14-x der Eingangsstufe 12 und der Ausgangsstufe 14 eine gleichartige Anbindung. Jedes der Module 13-x der Zentralstufe 13 kann deshalb gegen ein anderes Modul mit einem anderen Protokolltyp ausgetauscht werden. Damit ist es in der Zentralstufe 13 möglich, z.B. ein Modul mit einer SDH-Matrix gegen ein Modul mit einer IP-Matrix auszutauschen.

Die als Baugruppen ausgebildeten Schnittstellen 15 sind mit Mitteln versehen, um den Protokolltyp der übertragenen Information sich gegenseitig anzuzeigen. Ebenfalls sind die Schnittstellen 15 mit Mitteln versehen, um den Protokolltyp der angeschlossenen Module 13-x der Zentralstufe 13 festzustellen. Damit ist es den Schnittstellen 15 zwischen der Eingangsstufe 12 und der Zentralstufe 13 möglich, Information eines bestimmten Protokolltyps an ein Modul 13-x der Zentralstufe 13 mit demselben Protokolltyp weiterzuleiten.

Jedes der Module 12-x und 14-x der Eingangsstufe 12 und der Ausgangsstufe 14 ist mit einer ATM/IP-Matrix 16 versehen. Diese ATM/IP-Matrix 16 ist dazu vorgesehen, Informationspakete nach dem ATM-Protokoll oder dem IP-Protokoll zu vermitteln.

Wird von einem der Module 12-x der Eingangsstufe 12 Information in der Form von virtuellen Containern mit synchronem Inhalt nach dem SDH-Protokoll empfangen, so wird diese Information über die zugehörige Schnittstelle 15 an ein entsprechendes Modul 13-x der Zentralstufe 13 weitergegeben, das eine SDH-Matrix aufweist. Von diesem Modul 13-x der Zentralstufe 13 wird die Information weitergeschaltet und gelangt zu einer Schnittstelle 15, die zu einem der Module 14-x der Ausgangsstufe 14 gehört. Von dieser Schnittstelle 15 wird die Information wieder verarbeitet, um dann über das zugehörige Modul 14-x der Ausgangsstufe 14 ausgegeben zu werden.

Wird von einem der Module 12-x der Eingangsstufe 12 ein Paket nach dem ATM-Protokoll empfangen, so wird dieses Paket zuerst von der ATM/IP-Matrix 16 des Moduls 12-x aufbereitet. Danach wird das Paket von der zugehörigen Schnittstelle 15 an ein entsprechendes der Modul 13-x der Zentralstufe 13 weitergegeben, das eine ATM-Matrix aufweist. Von diesem Modul 13-x der Zentralstufe 13 wird das Paket weitergeleitet und gelangt zu einer Schnittstelle 15, die zu einem der Module 14-x der Ausgangsstufe 14 gehört. Von dieser Schnittstelle 15 wird das Paket wieder verarbeitet, um dann über das zugehörige Modul 14-x der Ausgangsstufe 14 und dessen ATM/IP-Matrix 16 ausgegeben zu werden.

Für ein Paket nach dem IP-Protokoll gilt das vorstehend für ein Paket nach dem ATM-Protokoll beschriebene Verfahren entsprechend. Anstelle einer ATM-Matrix wird jedoch ein Modul 13-x in der Zentralstufe 13 mit einer IP-Matrix verwendet.

Entsprechend der Figur ist ein Kontrollsystem 11 für den Neztwerkknoten 10 vorgesehen. Das Kontrollsystem 11 hat Verbindungen zu den Modulen 12-x der Eingangsstufe 12 und zu den Modulen 14-x der Ausgangsstufe 14. Die Module 13-x der Zentralstufe 13 werden über die Schnittstellen 15 gesteuert. Ebenfalls melden diese Module 13-x ihren Status auf Anforderung über die Schnittstellen 15 an die Module 14-x der Ausgangsstufe 14. Von dort wird dieser Status dann an das Kontrollsystem 11 weitergeleitet.

Das Einstellen von sogenannten Routing-Tabellen wird ausgehend von den Modulen 12-x der Eingangsstufe 12 über die Schnittstellen 15 durchgeführt. Ebenfalls werden Testdaten von den Modulen 12-x der Eingangsstufe 12 an die Module 14-x der Ausgangsstufe 14 gesendet. Diese Module 14-x erhalten von dem Kontrollsystem 11 die erforderlichen Informationen, um die Testdaten zu prüfen. Werden die Testdaten von den Modulen 14-x der Ausgangsstufe 14 korrekt empfangen, so gilt die Verbindung als korrekt eingerichtet.

Sind die Schnittstellen 15 in der Form von Schnittstellenadaptern zwischen der Eingangsstufe 12 und der Zentralstufe 13 sowie zwischen der Zentralstufe 13 und der Ausgangsstufe 14 vorhanden, so ist das Kontrollsystem 11 nicht mit den Modulen 12-x und 14-x der Eingangsstufe 12 und der Ausgangsstufe 14 verbunden, sondern nur mit den Modulen 13-x der Zentralstufe 13. Die Module 13-x werden dann direkt von dem Kontrollsystem 11 gesteuert.

Die verwendete Technologie zur gegenseitigen Verbindung der als Baugruppen ausgebildeten Schnittstellen 15 entscheidet, ob der Netzwerkknoten zentral in einem Gebäude aufgebaut werden muss oder dezentral aufgebaut werden kann. Die dezentrale Installation erhöht die Zuverlässigkeit.

## Patentansprüche

1. Netzwerkknoten (10) zum Vermitteln von digitaler Information unterschiedlicher Protokolltypen, mit mehreren Modulen (12-x, 13-x, 14-x), die in einer Eingangsstufe (12), einer Zentralstufe (13) und einer Ausgangsstufe (14) angeordnet sind, wobei jedes Modul (12-x) der Eingangsstufe (12) mit jedem Modul (13-x) der Zentralstufe (13) und jedes Modul (13-x) der Zentralstufe (13) mit jedem Modul (14-x) der Ausgangsstufe (14) verbunden ist, **dadurch gekennzeichnet, dass** jeweils zwischen der Eingangsstufe (12) und der Zentralstufe (13) sowie zwischen der Zentralstufe (13) und der Ausgangsstufe (14) eine für alle Protokolltypen einheitliche Schnittstelle (15) vorgesehen ist, dass jedes der Module (13-x) der Zentralstufe (13) für einen einzigen Protokolltyp ausgelegt ist, dass in der Zentralstufe (13) Module (13-x) für unterschiedliche Protokolltypen vorhanden sind, und dass die Schnittstellen (15) Mittel aufweisen, um Information in Abhängigkeit vom Protokolltyp an ein daran angepasstes Modul (13-x) der Zentralstufe (13) weiterzuleiten.

2. Netzwerkknoten (10) nach Anspruch 1, **dadurch gekennzeichnet, dass** die Module (13-x) der Zentralstufe (13) austauschbar sind.

3. Netzwerkknoten (10) nach einem der Ansprüche 1 oder 2, **dadurch gekennzeichnet, dass** die Module (12-x, 14-x) der Eingangsstufen (12) und der Ausgangsstufen (14) an mehrere oder sämtliche der unterschiedlichen Protokolltypen angepasst sind.

4. Netzwerkknoten (10) nach einem der Ansprüche 1 bis 3, **dadurch gekennzeichnet, dass** der Netzwerkknoten (10) dezentral aufgebaut ist.

5. Verfahren zum Vermitteln von digitaler Information unterschiedlicher Protokolltypen, wobei ein Netzwerkknoten (10) mit mehreren Modulen (12-x, 13-x, 14-x) vorgesehen ist, die in einer Eingangsstufe (12), einer Zentralstufe (13) und einer Ausgangsstufe (14) angeordnet sind, wobei jedes Modul (12-x) der Eingangsstufe (12) mit jedem Modul (13-x) der Zentralstufe (13) und jedes Modul (13-x) der Zentralstufe (13) mit jedem Modul (14-x) der Ausgangsstufe (14) verbunden ist, **dadurch gekennzeichnet, dass** jeweils zwischen der Eingangsstufe (12) und der Zentralstufe (13) sowie zwischen der Zentralstufe (13) und der Ausgangsstufe (14) eine für alle Protokolltypen einheitliche Schnittstelle (15) vorgesehen ist, dass jedes der Module (13-x) der Zentralstufe (13) für einen einzigen Protokolltyp ausgelegt ist, dass in der Zentralstufe (13) Module (13-x) für unterschiedliche Protokolltypen vorhanden sind, und dass Information von den Schnittstellen (15) in Abhängigkeit vom Protokolltyp an ein daran angepasstes Modul (13-x) der Zentralstufe (13) weitergeleitet wird.

## Claims

1. Network node (10) for conveying digital information of different protocol types, with several modules (12-x, 13-x, 14-x) arranged in an input level (12), a central level (13) and an output level (14), each module (12-x) of the input level (12) being connected to each module (13-x) of the central level (13) and each module (13-x) of the central level (13) to each module (14-x) of the output level (14), **characterised in that** between the input level (12) and the central level (13) and between the central level (13) and the output level (14) a uniform interface (15) for all protocol types is provided in each case, **in that** each of the modules (13-x) of the central level (13) is configured for a single protocol type, **in that** in the central level (13) there are modules (13-x) for different protocol types and **in that** the interfaces (15) have means for forwarding information as a function of the protocol type to a module (13-x) of the central level (13) matched thereto.

2. Network node (10) according to claim 1, **characterised in that** the modules (13-x) of the central level (13) are interchangeable.

3. Network node (10) according to one of claims 1 or 2, **characterised in that** the modules (12-x, 14-x) of the input levels (12) and the output levels (14) are matched to several or all the different protocol types.

4. Network node (10) according to one of claims 1 to 3, **characterised in that** the network node (10) is set up remotely.

5. Method for conveying digital information of different protocol types, wherein a network node (10) is provided with several modules (12-x, 13-x, 14-x) arranged in an input level (12), a central level (13) and an output level (14), each module (12-x) of the input level (12) being connected to each module (13-x) of the central level (13) and each module (13-x) of the central level (13) to each module (14-x) of the output level (14), **characterised in that** between the input level (12) and the central level (13) and between the central level (13) and the output level (14) a uniform interface (15) for all protocol types is provided in each case, **in that** each of the modules (13-x) of the central level (13) is configured for a single protocol type, **in that** in the central level (13) there are modules (13-x) for different protocol types and **in that** information is forwarded by the interfaces (15) as a function of the protocol type to a module (13-x) of the central level (13) matched thereto.

## Revendications

1. Noeud de réseau (10) destiné à communiquer des informations numériques employant différents types de protocoles, comprenant plusieurs modules (12-x, 13-x, 14,x) qui sont disposés dans un étage d'entrée (12) un étage central (13) et un étage de sortie (14), chaque module (12-x) de l'étage d'entrée (12) étant relié avec chaque module (13-x) de l'étage central (13) et chaque module (13-x) de l'étage central (13) étant relié à chaque module (14-x) de l'étage de sortie (14), **caractérisé en ce qu'**une interface (15) uniforme pour tous les types de protocole est à chaque fois prévue entre l'étage d'entrée (12) et l'étage central (13) ainsi qu'entre l'étage central (13) et l'étage de sortie (14), que chacun des modules (13-x) de l'étage central (13) est conçu pour un seul type de protocole, que des modules (13-x) pour différents types de protocoles se trouvent dans l'étage central (13) et que les interfaces (15) présentent des moyens pour retransmettre les informations en fonction du type de protocole à un module (13-x) de l'étage central (13) adapté à cet effet.

2. Noeud de réseau (10) selon la revendication 1, **caractérisé en ce que** les modules (13-x) de l'étage central (13) peuvent être remplacés.

3. Noeud de réseau (10) selon l'une des revendications 1 ou 2, **caractérisé en ce que** les modules (12-x, 14-x) des étages d'entrée (12) et des étages de sortie (14) sont adaptés à plusieurs ou à la totalité des différents types de protocoles.

4. Noeud de réseau (10) selon l'une des revendications 1 ou 3, **caractérisé en ce que** le noeud de réseau (10) est construit de manière décentralisée.

5. Procédé pour communiquer des informations numériques employant différents types de protocoles, un noeud de réseau (10) comprenant plusieurs modules (12-x, 13-x, 14,x) étant prévu, lesquels sont disposés dans un étage d'entrée (12) un étage central (13) et un étage de sortie (14), chaque module (12-x) de l'étage d'entrée (12) étant relié avec chaque module (13-x) de l'étage central (13) et chaque module (13-x) de l'étage central (13) étant relié à chaque module (14-x) de l'étage de sortie (14), **caractérisé en ce qu'**une interface (15) uniforme pour tous les types de protocole est à chaque fois prévue entre l'étage d'entrée (12) et l'étage central (13) ainsi qu'entre l'étage central (13) et l'étage de sortie (14), que chacun des modules (13-x) de l'étage central (13) est conçu pour un seul type de protocole, que des modules (13-x) pour différents types de protocoles se trouvent dans l'étage central (13) et que les informations sont retransmises par les interfaces (15) en fonction du type de protocole à un module (13-x) de l'étage central (13) adapté à cet effet.
